# EUROPÄISCHE PATENTSCHRIFT

(11) **EP 2 219 904 B1**
(45) Veröffentlichungstag und Bekanntmachung des Hinweises auf die Patenterteilung: **01.08.2012**
(21) Anmeldenummer: 08864007.3
(22) Anmeldetag: 05.12.2008
(51) Int. Cl.: B60R 19/38, B60R 19/56

(54) **UNTERFAHRSCHUTZEINRICHTUNG FÜR EINEN LASTKRAFTWAGEN**
UNDERRIDE PREVENTION DEVICE FOR A HEAVY GOODS VEHICLE
DISPOSITIF DE PROTECTION ANTI-ENCASTREMENT POUR UN CAMION

(30) Priorität: 22.12.2007 DE 102007062584
(43) Veröffentlichungstag der Anmeldung: 25.08.2010
(73) Patentinhaber: Daimler AG, 70327 Stuttgart (DE)
(72) Erfinder: SCHERER, Jörg, 73730 Esslingen (DE)
(74) Vertreter: JENSEN & SON
(86) Internationale Anmeldenummer: PCT/EP2008/010324
(87) Internationale Veröffentlichungsnummer: WO 2009/080187

(56) Entgegenhaltungen:
- DE-A1-102004 024 159
- DE-B- 1 288 465
- US-A- 2 990 212

## Beschreibung

Die Erfindung betrifft eine Unterfahrschutzeinrichtung für einen Lastkraftwagen der im Oberbegriff des Patentanspruchs 1 angegebenen Art.

Derartige Unterfahrschutzeinrichtungen sind beispielsweise bereits aus der EP 1 132 259 B1 als bekannt zu entnehmen. Jede der Unterfahrschutzeinrichtungen umfasst dabei ein Barrierelement in Form eines Querträgers sowie eine Halteanordnung, mittels welcher das Barriereelement bzw. der Querträger am Fahrzeugrahmen des Lastkraftwagens gehalten ist. Die Halteanordnung ist dabei jeweils so ausgebildet, dass das Barriereelement bzw. der Querträger zwischen einer Fahrstellung und wenigstens einer weiteren Stellung verlagerbar bzw. klappbar ist.

Ist beispielsweise der Lastkraftwagen als sogenannter Luftkipper ausgebildet, also als Nutzfahrzeug mit einer entsprechend kippbaren Mulde, so ergibt sich beispielsweise die Problematik, dass beim Einsatz des Fahrzeuges zur Straßenfertigung ein sogenannter Straßenfertiger in den Nahbereich hinter dem Lastkraftwagen gebracht werden muss. Insbesondere bei luftgefederten Lastkraftwagen ergibt sich dabei bisher die Problematik, dass das Barriereelement bzw. der Querträger äußerst schwer in eine Ausweichstellung gebracht werden kann, so dass der Straßenfertiger mit seinem vorderen Ende hinter bzw. unterhalb des Lastkraftwagens, insbesondere von dessen Fahrzeugrahmen, positioniert werden kann.

Zum weiteren technischen Hintergrund: In der DE 10 2004 024159 A1 wird eine Unterfahrschutzeinrichtung für ein Lastentransportfahrzeug vorgeschlagen, die eine Unterfahrschutzbarriere zur Sicherung eines heckseitigen Bereichs des Lastentransportfahrzeugs gegen das Auffahren bzw. Unterfahren durch ein anderes Fahrzeug aufweist. Vorschlagsgemäß ist ferner eine Halterungseinrichtung zur Befestigung der Unterfahrschutzbarriere am heckseitigen Ende des Fahrzeugrahmens umfasst. Die Halterungseinrichtung weist wenigstens einen relativ zum Fahrzeugrahmen um eine horizontale Schwenkachse schwenkbaren, die Unterfahrschutzbarriere haltenden Schwenkarm auf. Die vorgeschlagene Haltenungseinrichtung bietet zusätzlich zu der Möglichkeit des Verschwenkens des Schwenkarmes um die Schwenkachse wenigstens eine weitere Möglichkeit der Verstellung der Unterfahrschutzbarriere relativ zum Fahrzeugrahmen. Die Unterfahrschutzbarriere ist zum Einbringen in die Freigabestellung nahe an das Fahrzeugheck heranführbar.

Aufgabe der vorliegenden Erfindung ist es, eine Unterfahrschutzeinrichtung der eingangs genannten Art zu schaffen, mittels welcher der Lastkraftwagen universeller und günstiger einsetzbar ist.

Diese Aufgabe wird erfindungsgemäß durch eine Unterfahrschutzeinrichtung sowie einen Lastkraftwagen mit den Merkmalen der Patentansprüche 1 bis 8 gelöst. Vorteilhafte Ausgestaltungen mit zweckmäßigen und nicht-trivialen Weiterbildungen der Erfindung sind in den übrigen Patentansprüchen angegeben.

Um ein Unterfahrschutzeinrichtung für einen Lastkraftwagen zu schaffen, mittels welcher dieser universeller und günstiger einsetzbar ist, ist es erfindungsgemäß vorgesehen, dass das Barriereelement bzw. der Querträger mittels der Halteanordnung zwischen der Fahrstellung und einer nach vorne geklappten Stellung in den Bereich von jeweiligen Reifen des Lastkraftwagens klappbar ist. Mit anderen Worten ist es erfindungsgemäß vorgesehen, die Halteanordnung des Barriereelements so zu gestalten, dass das Barriereelement nicht nur wie bisher üblich nach hinten hingeklappt und arretiert werden kann, sondern eben auch freibeweglich nach vorne in den Bereich der jeweiligen hinteren Reifen des Lastkraftwagens.

Erfindungsgemäß weisen das Barriereelement bzw. der Querträger ferner jeweilige Laufrollen auf, welche in der nach vorne geklappten Stellung in Anlage mit den jeweiligen Reifen des Lastkraftwagens kommen. Dies hat insbesondere den Vorteil, dass ein besonders schonender Kontakt zwischen dem Reifen des Lastkraftwagens und dem Barriereelement in der nach vorne geklappten Stellung hergestellt werden kann.

Insbesondere kann dadurch erreicht werden, dass das Barriereelement bzw. der Querträger in der nach vorne geklappten Stellung in Anlage mit den jeweiligen hinteren Reifen des Lastkraftwagens kommt. Hierdurch ergibt sich eine besonders günstige Abstützung des Barriereelements an den hinteren Reifen des Lastkraftwagens, ohne dass es hierbei zu einer Schädigung von Fahrwerkskomponenten wie beispielsweise den Luftfederbalgen oder dergleichen kommen kann. In dieser nach vorne geklappten Stellung ist es vorteilhaft, dass die Haltevorrichtung des Barriereelements bzw. des Querträgers nicht eingerastet werden kann, um somit eine direkte Krafteinleitung, verursacht von einem Straßenfertiger, in das Fahrwerk des Lastkraftwagens zu erhalten, und um darüber hinaus auch unterschiedliche Reifendurchmesser, verursacht durch den Betrieb mit unterschiedlichen Reifengrößen, Reifenfabrikaten und auch einen Reifenabrieb auffangen zu können. Dies bedeutet, es ist in jedem Fall gegeben, dass das Barriereelement bzw. der Querträger immer an den Hinterreifen anliegt.

Weiterhin vorteilhaft ist es, wenn wenigstens ein Federelement vorgesehen ist, mittels welchem das Barriereelement bzw. der Querträger in der nach vorne geklappten Stellung, insbesondere in Anlage an den jeweiligen Reifen des Lastkraftwagens, gehalten ist. Somit kann auf besonders zuverlässige Weise sichergestellt werden, dass das Barriereelement bzw. der Querträger durch Federunterstützung unmittelbar in Anlage mit den hinteren Reifen kommt.

Weiterhin vorteilhaft ist es wenn die Laufrollen als drehbare Laufrollen ausgebildet sind, welche entsprechend an dem Barriereelement bzw. dem Querträger gelagert sind. Hiermit ist es möglich, dass die Laufrollen im Fahrbetrieb des Lastkraftwagens - beispielsweise beim Fertigen einer Straße - entsprechend mit den Reifen des Kraftwagens wälzen.

In weiterer Ausgestaltung der Erfindung hat es sich als zudem vorteilhaft gezeigt, wenn das Barriereelement bzw. der Querträger in seiner Fahrstellung mittels wenigstens eines Sicherungselements gehalten ist. Hierdurch ergibt sich eine besonders zuverlässige Festlegung des Barriereelements bzw. des Querträgers am Fahrzeugrahmen.

In weiterer Ausgestaltung der Erfindung weist das Barriereelement bzw. der Querträger wenigstens ein Abstützelement je Querträgerende zur Anlage der Fertigerrolle des Straßenfertigers auf. Somit ist es insbesondere möglich, die Laufrollen als drehbare Laufrollen auszugestalten und dennoch eine sichere Anlage der Fertigerrolle des Straßenfertigers zu ermöglichen.

Weitere Vorteile, Merkmale und Einzelheiten der Erfindung ergeben sich aus der nachfolgenden Beschreibung eines bevorzugten Ausführungsbeispiels sowie anhand der Zeichnungen, diese zeigen in:

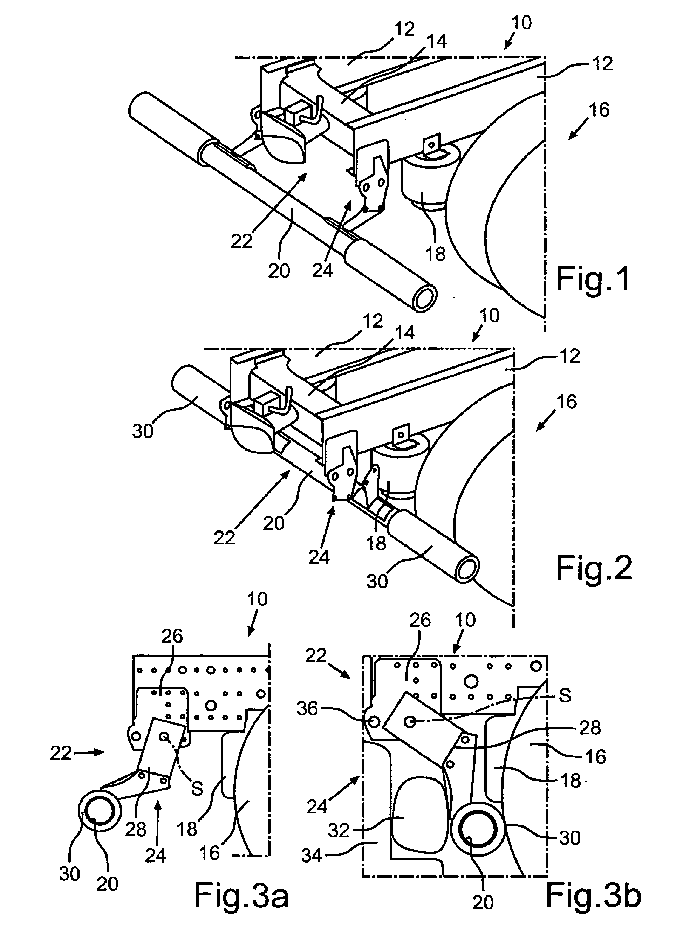

- Fig. 1: eine ausschnittsweise Perspektivansicht auf das hintere Ende eines luftgefederten Lastkraftwagens mit einer Unterfahrschutzeinrichtung, deren Barriereelement in Form eines Querträgers in seiner Halteranordnung an einem Fahrzeugrahmen des Lastkraftwagens gehalten ist, wobei das Barriereelement bzw. der Querträger vorliegend in einer Fahrstellung mit Abstand zu jeweiligen hinteren Reifen des Lastkraftwagens angeordnet und arretiert ist;
- Fig. 2: eine ausschnittsweise Perspektivansicht auf das hintere Ende des Lastkraftwagens analog zu Fig. 1, wobei das Barriereelement bzw. der Querträger der Unterfahrschutzeinrichtung mittels der Halteanordnung aus der in Fig. 1 dargestellten Fahrstellung in eine nach vorne geklappte Stellung verlagert worden und frei beweglich ist, in welcher das Barriereelement an den jeweils korrespondierenden hinteren Reifen des Lastkraftwagens mit jeweiligen Laufrollen anliegt;
- Fig. 3a und 3b: jeweils eine ausschnittsweise Seitenansicht auf das hinter Ende des Lastkraftwagens gemäß den Fig. 1 und 2, wobei das Barriereelement bzw. der Querträger in Fig. 3a in der Fahrposition analog zu Fig. 1 dargestellt und in Fig. 3b in der nach vorne geklappten Stellung analog zu Fig. 2 gezeigt ist;

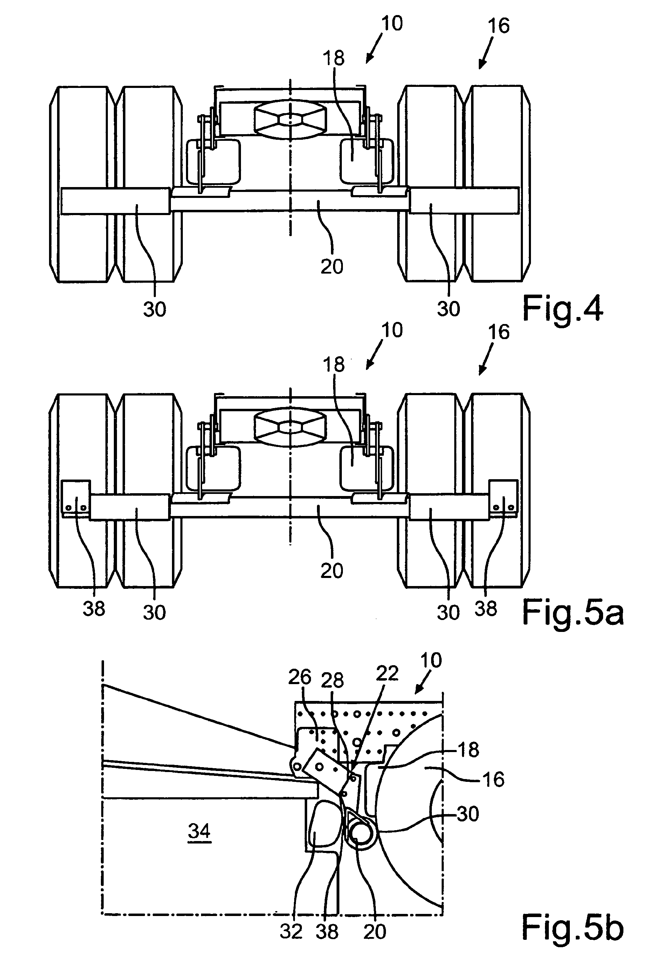

- Fig. 4: eine Rückansicht auf das hintere Ende des Lastkraftwagens mit der Unterfahrschutzeinrichtung analog den Fig. 1 bis 3b, wobei insbesondere erkennbar ist, dass die Laufrollen in ihrer seitlichen Breite an einen äußeren Abstand der jeweiligen Reifen des Lastkraftwagens angepasst sind;
- Fig. 5a und 5b: eine Rückansicht bzw. eine ausschnittsweise Seitenansicht auf eine Unterfahrschutzeinrichtung nach einer alternativen Ausführungsform, bei welcher die Laufrollen seitlich kürzer ausgebildet sind, als der äußere Abstand der jeweiligen Reifen des Lastkraftwagens, wobei außenseitig der Laufrollen jeweils ei Abstützelement je Querträgerende zur Anlage einer in Fig. 5b erkennbaren Fertigerrolle eines Straßenfertigers aufweist;
- Fig. 5a, 5b und 5c: eine ausschnittsweise vergrößerte Perspektivansicht, eine ausschnittsweise Seitenansicht, sowie eine ausschnittsweise vergrößerte Seitenansicht auf das hintere Ende des Lastkraftwagens mit der Unterfahrschutzeinrichtung einer weiteren Ausführungsform, welcher im Bereich des jeweiligen hinteren Zwillingreifens jeweils drei Halteelemente für die bereits in Fig. 5b erkennbare Fertigerrolle eines Straßenfertigers vorgesehen sind, wobei zwischen den jeweiligen drei Halteelementen jeweils zwei Laufrollen angeordnet sind, welche in der nach vorne geklappten Stellung des Barriereelements bzw. des Querträgers entsprechend mit dem jeweiligen hinteren Zwillingsreifen wälzen; und

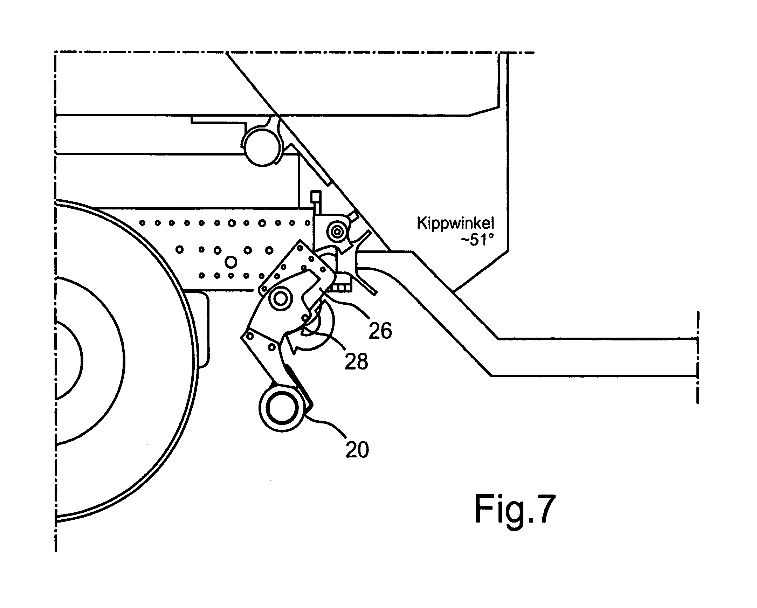

- Fig. 7: eine ausschnittsweise Seitenansicht auf eine Unterfahrschutzeinrichtung nach einer alternativen Ausführungsform.

In den Fig. 1 und 2 ist jeweils in einer ausschnittsweisen Perspektivansicht das hintere Ende eines luftgefederten Lastkraftwagens, welcher im vorliegenden Fall eine Luftkipper mit einer kippbaren Mulde ist, dargestellt. Und im Lastkraftwagen ist dabei im Wesentlichen ein Fahrzeugrahmen 10 mit zwei Rahmenlängsträgern 12 erkennbar, welche über jeweilige Querträger 14 miteinander verbunden sind. Ebenfalls erkennbar sind zwei jeweilige hintere Zwillingsreifen 16, welchen unter Vermittlung eines luftgefederten Fahrwerks, von welchem im Wesentlichen die jeweilige seitliche Luftbälge 18 erkennbar sind.

Am hinteren Ende des Fahrzeugrahmens 10 ist ein Barriereelement einer Unterfahrschutzeinrichtung in Form eines Querträgers 20 erkennbar, welches sich in Fahrzeugquerrichtung und horizontal erstreckt. Das Barriereelement bzw. der Querträger 20 ist dabei über eine Halteanordnung 22 am Fahrzeugrahmen 10 gehalten, welche zwei Scharniereinrichtungen 24 umfasst, welche am jeweiligen Längsträger 12 angeordnet sind. Jede Scharniereinrichtung 24 umfasst im vorliegenden Fall einen rahmenseitigen Halter 26 und einen mehrteiligen querträgerseitigen Halter 28 welcher um eine entsprechende Schwenkachse S gelenkig miteinander verbunden sind. Die beiden Schwenkachsen S jeder der Schwenkeinrichtungen 24 fluchten dabei zueinander in Fahrzeugquerrichtung. Es ist klar, dass anstelle der hier gezeigten Scharniereinrichtung 24 auch eine andere Halteanordnung 22 gewählt werden könnte.

In den Fig. 3a und 3b sind in einer jeweiligen ausschnittsweisen Seitenansicht das hintere Ende des Lastkraftwagens im Bereich der Unterfahrschutzeinrichtung erkennbar, wobei neben der Darstellung gemäß Fig. 1 auf die Darstellung in Fig. 3a Barriereelement bzw. den Querträger 20 in einer Fahrposition zeigen, welcher dieser einnimmt, wenn sich Lastkraftwagen im normalen Fahrbetrieb befindet. In den Fig. 2 und 3b ist hingegen das Barriereelement bzw. der Querträger 20 in einer nach vorne unten geklappten bzw. geschwenkten Stellung gezeigt, welches dieses beispielsweise einnimmt, wenn der Lastkraftwagen bei der Straßenfertigung eingesetzt wird. Dann muss nämlich das Barriereelement bzw. der Querträger 20 in eine entsprechende Ausweichstellung bzw. nach vorne verlagerte Stellung gebracht werden, damit ein Straßenfertiger mit einem vorderen Ende in einem Bereich unterhalb des hinteren Endes des Fahrzeugrahmen 10 kommen kann.

Wie insbesondere aus den Fig. 2 und 3b erkennbar ist, wird das Barriereelement bzw. der Querträger 20 hierzu mittels der Halteanordnung 22 zwischen der Fahrstellung und der nach vorne geklappten Stellung - um die Schwenkachse S - in dem Bereich der jeweiligen Reifen 16 geklappt. Im vorliegenden Fall wird das Barriereelement bzw. der Querträger 20 bei in Anlage mit den jeweiligen Reifen 16 nach vorne unten geschwenkt. Dabei umfasst das Barriereelement bzw. der Querträger 20 zwei außenseitig angeordnete Laufrollen 30, die um ihre zentrale Achse bzw. um die Mittelachse des Querträgers 20 drehen bzw. rotieren können. Es wird somit das Barriereelement bzw. der Querträger 20 - wie in den Fig. 2 und 3b erkennbar - in Anlage mit den hinteren Reifen 16 gebracht, so wälzen die als Laufrollen ausgebildeten Laufrollen 30 entsprechend mit den hinteren Reifen 16, beispielsweise wenn der Lastkraftwagen zur Fertigung einer Straße sehr langsam bewegt wird.

Insbesondere aus Fig. 3b ist dabei erkennbar, in welcher Weise sich ein Fertigerteil 32, in Form einer Druckrolle eines lediglich ausschnittsweise erkennbaren Straßenfertigers 34, an dem Barriereelement bzw. dem Querträger 20 abstützen kann. Dies erfolgt beispielsweise unter Abstützung einer den querträgerseitigen Haltern 20 der jeweiligen Scharniereinrichtung 24. Hiermit ist insbesondere aus Fig. 3b erkennbar, dass das Barriereelement bzw. der Querträger 20 eine untere vordere Ausweichstellung bewegbar sind, in welcher Straßenfertiger 34 mit seinem vorderen Ende unterhalb des Fahrzeugrahmens 10 Platz findet und sich entsprechend dem Fertigerteil 32 in Form einer entsprechenden Druckrolle an dem Barriereelement bzw. Querträger 20 abstützen kann. Das Barriereelement bzw. der Querträger 20 stützt sich hierbei unter Vermittlung der Laufrollen 30 an den hinteren Reifen 16 ab. Somit ist insgesamt eine Anordnung geschaffen, bei welcher der Straßenfertiger besonders bevorzugt an der Unterfahrschutzeinrichtung angeordnet werden kann. Gleichfalls ist aus Fig. 3b erkennbar, dass die Unterfahrschutzeinrichtung besonders zuverlässig die Komponenten des Fahrwerks - insbesondere die jeweiligen Luftbälge 18 - vor einer Beschädigung schützen kann. Gleichfalls ist erkennbar, dass die Halter 28 so ausgebildet sind, dass ein Höhenausgleich des Fertigerteils 32 des Straßenfertigers 34 relativ zu dem Lastkraftwagen bzw. der Unterfahrschutzeinrichtung möglich ist.

Aus Fig. 3a ist des Weiteren ein Sicherungselement 36 in Form eines Sicherungsbolzens erkennbar, mittels welchem die jeweiligen Halter 26, 28 derart gegeneinander bzw. gegen ein Verschwenken um die Schwenkachse S gesichert werden können, so dass das Barriereelement bzw. der Querträger 20 sicher in seiner Fahrstellung gehalten ist.

Fig. 4 zeigt schließlich eine Rückansicht auf das hintere Teil des Lastkraftwagens bzw. die Unterfahrschutzeinrichtung, wobei insbesondere erkennbar ist, dass die Laufrollen 30 seitlich in einer Breite ausgebildet sind, dass diese in etwa äußeren Abstand der jeweiligen Reifen 16 entsprechen. Mit anderen Worten steht zwar das Barriereelement bzw. der Querträger 20 mit den Laufrollen 30 nicht gegenüber den korrespondierenden Zwillingsreifen 16 gegenüber ist jedoch in etwa an deren äußeren Abstand bzw. die Breite des Fahrzeugs angepasst.

Die Fig. 5a und 5b zeigen in einer Heckansicht bzw. einer ausschnittsweisen Seitenansicht wiederum das hintere Ende des Lastkraftwagens im Bereich der Unterfahrschutzeinrichtung, welche hier in einer modifizierten Ausführungsform dargestellt ist. Diese unterscheidet sich im Wesentlichen dadurch, dass die Laufrollen 30 zur Außenseite kürzer ausgebildet sind, wobei außenseitig des Barriereelements bzw. Querträgers 20 jeweils ein Abstützelement 38 vorgesehen ist, welches als jeweilige winkelförmige Schubplatte gestaltet ist. An diesen Abstützelementen 38 kann sich das Fertigerteil 32 in Form der Druckrolle des Straßenfertigers 34 insbesondere bei Kurvenfahrten abstützen, weil dabei der Straßenfertiger keine Linienberührung über die Laufrollen 30, sondern vielmehr nur noch eine Punktberührung hat. Das Ende des jeweiligen Fertigerteils 32 in Form der Druckrolle stützt sich dann nur an dem jeweiligen Halteelement 38 in Form der Schubplatte ab, wobei die Höhe des Abstützelements 38 definiert ist durch die verschiedenen Höhen der Druckrollen 30 der meisten bzw. gängigsten Straßenfertigerausführungen.

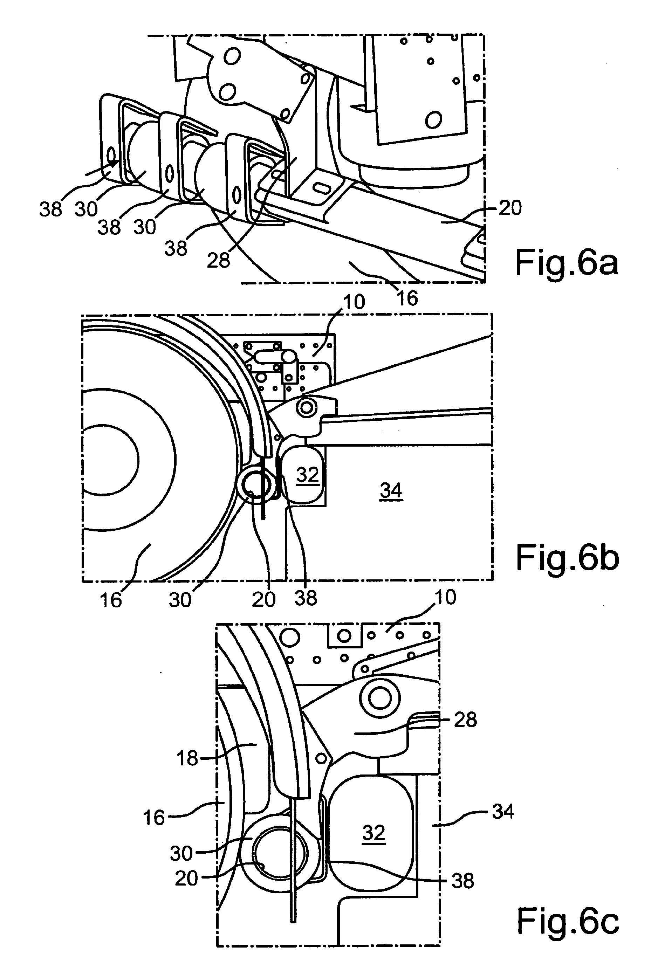

In den Fig. 6a bis 6c ist schließlich jeweils in einer ausschnittsweisen Perspektivansicht, einer ausschnittsweisen Seitenansicht und einer ausschnittsweise vergrößerten Seitenansicht das hintere Ende des Lastkraftwagens mit der Unterfahrschutzeinrichtung nach einer weiteren alternativen Ausführungsform dargestellt. Diese unterscheidet sich von den anderen Ausführungsformen insbesondere dadurch, dass im vorliegenden Fall pro jeweiliger Außenseite des Barriereelements bzw. Querträgers 20 je drei Abstützelemente 38 vorgesehen sind, welche voneinander entsprechend beabstandet sind. Die jeweiligen drei Abstützelemente 38 sind wiederum als Schutzplatten ausgebildet, welche unmittelbar an dem Querträger 20 festgelegt sind. Zwischen den drei Halteelementen 38 sind dabei zwei Laufrollen 30 vorgesehen, welche mit dem jeweils zugehörigen Zwillingsreifen 16 wälzen, wenn sich das Barriereelement bzw. der Querträger 20 in der unteren vorderen Stellung befindet. Dies ist insbesondere aus den Fig. 6b und 6c erkennbar. Somit stützt sich in der vorderen Stellung die Fertigerrolle 32 des Straßenfertigers 34 an den Abstützelementen 38 ab, um hierdurch eine besonders günstige Anordnung des ausschnittsweise erkennbaren Straßenfertigers 36 an dem Lastkraftwagen bzw. der Unterfahrschutzeinrichtung zu erhalten. Die Abstützelemente 38 sorgen dabei wiederum dafür, dass kein unmittelbarer Kontakt zwischen der Fertigerrolle 32 und den Laufrollen 30 besteht. Eine Anpassung der Fahrerhöhe zum Straßenfertiger 34 ist dabei im vorliegenden Fall nicht mehr nötig. Die Höhe der einzelnen Halteelemente 38 ist dabei durch die jeweilige Rollenhöhe der Laufrollen 30 der verschiedenen Fertigertypen definiert.

In der Fahrstellung ist das Barriereelement bzw. der Querträger 20 vorliegend jeweils so arretierbar, dass sich von dessen Unterkante bis zum Boden ein Abstand von maximal 550 mm ergibt, um somit den gesetzlich vorgeschriebenen Maximalabstand von 550 mm (Boden - Unterkante Querträger) im Fahrbetrieb zu gewährleisten. Darüber hinaus ist es notwendig, dass von dem zweiteiligen Halter 26 ein unteres Halterteil gemeinsam mit dem Barriereelement bzw. dem Querträger 20 weiter nach oben verschwenkt und arretiert werden kann, um eine zusätzliche Anhebung des Barriereelements bzw. Querträgers 20 zu erhalten, um so einen gesetzlich geforderten Böschungswinkel von mindestens 25° zu bekommen, der das Fahrzeug somit geländetauglich macht.

In Fig. 7 ist in einer ausschnittsweisen Seitenansicht eine Unterfahrschutzeinrichtung nach einer alternativen Ausführungsform dargestellt. Der Halter 28 ist dabei gemeinsam mit dem Barriereelement bzw. dem Querträger 20 weiter nach vorne unten geschwenkt und arretiert gegenüber dem Halter 26, um so ein Betrieb des Lastwagens mit einem Anhänger mit Zentralachse zu betreiben. In diesem Fall ist die Deichsel des Anhängers unmittelbar nach dem Koppelmaul bzw. der Anhängerkupplung stark nach unten gekröpft. In dieser unteren vorderen Querträgerposition kann somit ein ungehindertes Durchschwenken der Deichsel des Anhängers bei Kurvenfahrt gewährleistet werden, ohne dass der Anhänger mit dem Barriereelement bzw. Querträger 20 in Berührung kommt.

## Patentansprüche

1. Unterfahrschutzeinrichtung für einen Lastkraftwagen, insbesondere einen luftgefederten Lastkraftwagen, mit einem Barriereelement (20) mit einer Halteranordnung (22) zur Halterung des Barriereelements (20) an einem Fahrzeugrahmen (10) des Lastkraftwagens, mittels welcher das Barriereelement (20) zwischen einer Fahrstellung und einer nach vorne geklappten Stellung im Bereich von jeweiligen Reifen (16) des Lastkraftwagen klappbar ist,
**dadurch gekennzeichnet, dass**
das Barriereelement (20) jeweilige Laufrollen (30) aufweist, welche in der nach vorne geklappten Stellung in Anlage mit den jeweiligen Reifen (16) des Lastkraftwagens kommen.

2. Unterfahrschutzeinrichtung nach Anspruch 1,
**dadurch gekennzeichnet, dass**
das Barriereelement (Querträger 20) zur Anlage an den jeweiligen Reifen (16) des Lastkraftwagens in der nach vorne geklappten Stellung ausgebildet ist.

3. Unterfahrschutzeinrichtung nach Anspruch 1 oder 2,
**dadurch gekennzeichnet, dass**
wenigstens ein Federelement vorgesehen ist, mittels welchem das Barriereelement (Querträger 20) in der nach vorne geklappten Stellung, insbesondere in Anlage an den jeweiligen Reifen (16) des Lastkraftwagens, gehalten ist.

4. Unterfahrschutzeinrichtung nach Anspruch 3,
**dadurch gekennzeichnet, dass**
die Laufrollen (30) als drehbare Laufrollen ausgebildet sind.

5. Unterfahrschutzeinrichtung nach Anspruch 3 oder 4,
**dadurch gekennzeichnet, dass**
die Laufrollen (30) seitlich kürzer ausgebildet sind als ein äußerer Abstand der jeweiligen Reifen (16) des Lastkraftwagens.

6. Unterfahrschutzeinrichtung nach einem der Ansprüche 1 bis 5,
**dadurch gekennzeichnet, dass**
das Barriereelement (Querträger 20) in seiner Fahrstellung mittels wenigstens eines Sicherungselements (36) gehalten ist.

7. Unterfahrschutzeinrichtung nach einem der Ansprüche 1 bis 6,
**dadurch gekennzeichnet, dass**
das Barriereelement (Querträger 20) wenigstens ein Haltelement (38) zur Anlage eines Fertigerteils in Form einer Druckrolle (32) eines Straßenfertigers (34) aufweist.

8. Lastkraftwagen, insbesondere luftgefederter Lastkraftwagen, mit einer Unterfahrschutzeinrichtung nach wenigstens einem der Ansprüche 1 bis 7.

## Claims

1. Underride prevention device for a heavy goods vehicle, in particular an air-suspended heavy goods vehicle, comprising a barrier element (20) with a holder arrangement (22) for holding the barrier element (20) on a vehicle frame (10) of the heavy goods vehicle, by means of which holder arrangement (22) the barrier element (20) can be pivoted between a travelling position and a forward-folded position in the region of respective tyres (16) of the heavy goods vehicle,
**characterised in that**
the barrier element (20) is provided with respective castors (30) which come into contact with the respective tyres (16) of the heavy goods vehicle in the forward-folded position.

2. Underride prevention device according to claim 1,
**characterised in that**
the barrier element (crossmember 20) is designed for contacting the respective tyres (16) of the heavy goods vehicle in the forward-folded position.

3. Underride prevention device according to claim 1 or 2,
**characterised in that**
at least one spring element is provided, by means of which the barrier element (crossmember 20) is held in the forward-folded position, in particular in contact with the respective tyres (16) of the heavy goods vehicle.

4. Underride prevention device according to claim 3,
**characterised in that**
the castors (30) are designed as rotatable castors.

5. Underride prevention device according to claim 3 or 4,
**characterised in that**
the castors (30) are laterally shorter than an external spacing of the respective tyres (16) of the heavy goods vehicle.

6. Underride prevention device according to any of claims 1 to 5,
**characterised in that**
the barrier element (crossmember 20) is held in its travelling position by means of at least one locking element (36).

7. Underride prevention device according to any of claims 1 to 6,
**characterised in that**
the barrier element (crossmember 20) comprises at least one retaining element (38) for contact with a finisher part in the form of a pressure roller (32) of a road finisher (34).

8. Heavy goods vehicle, in particular air-suspended heavy goods vehicle, comprising an underride prevention device according to one or more of claims 1 to 7.

## Revendications

1. Dispositif de protection anti-encastrement pour un camion, en particulier un camion à suspension pneumatique, comportant un élément formant barrière (20) et un ensemble de fixation (22) pour fixer l'élément formant barrière (20) sur un châssis (10) du camion, au moyen duquel l'élément formant barrière (20) peut être rabattu entre une position de roulement et une position rabattue vers l'avant dans la région de pneumatiques respectifs (16) du camion, **caractérisé en ce que** l'élément format barrière (20) présente des galets de roulement respectifs (30) qui dans la position rabattue vers l'avant prennent appui sur les pneumatiques respectifs (16) du camion.

2. Dispositif de protection anti-encastrement selon la revendication 1, **caractérisé en ce que** l'élément format barrière (20) est conçu pour prendre appui dans la position rabattue vers l'avant sur les pneumatiques respectifs (16) du camion.

3. Dispositif de protection anti-encastrement selon la revendication 1 ou la revendication 2, **caractérisé en ce qu'**il est prévu au moins un élément de ressort qui permet de maintenir l'élément format barrière (traverse 20) dans la position rabattue, en particulier en appui sur les pneumatiques respectifs (16) du camion.

4. Dispositif de protection anti-encastrement selon la revendication 3, **caractérisé en ce que** les galets de roulement (30) sont conçus comme des galets de roulement rotatifs.

5. Dispositif de protection anti-encastrement selon la revendication 3 ou la revendication 4, **caractérisé en ce que** les galets de roulement (30) sont latéralement plus courts qu'une distance extérieure des pneumatiques respectifs (16) du camion.

6. Dispositif de protection anti-encastrement selon l'une quelconque des revendications 1 à 5, **caractérisé en ce que** l'élément formant barrière (traverse 20) est maintenu dans sa position de roulement au moyen d'au moins un élément de blocage (36).

7. Dispositif de protection anti-encastrement selon l'une quelconque des revendications 1 à 6, **caractérisé en ce que** l'élément formant barrière (traverse 20) présente au moins un élément de maintien (38) pour l'appui d'un élément préfabriqué en forme de rouleau presseur (32) d'un finisseur (34).

8. Camion, en particulier un camion à suspension pneumatique comprenant un dispositif de protection anti-encastrement selon au moins l'une quelconque des revendications 1 à 7.
